Europäisches Patentamt

European Patent Office

Office européen des brevets

(11) Veröffentlichungsnummer: **0 327 858**
**A1**

## (12) EUROPÄISCHE PATENTANMELDUNG

(21) Anmeldenummer: 89100941.7

(22) Anmeldetag: 20.01.89

(51) Int. Cl.⁴: **B65H 31/30** , **B65H 3/32** ,
**B65G 61/00** , **B65G 59/02**

(30) Priorität: 06.02.88 DE 3803578

(43) Veröffentlichungstag der Anmeldung:
16.08.89 Patentblatt 89/33

(84) Benannte Vertragsstaaten:
AT CH DE FR GB IT LI NL

(71) Anmelder: MINDA INDUSTRIEANLAGEN GmbH
Wittelsbacherallee 84
D-4950 Minden(DE)

(72) Erfinder: Niemann, Bernd, Dipl.-Ing.
Ellerburger Strasse 33
D-4952 Porta Westfalica(DE)
Erfinder: Coith, Karl-Werner, Ing.grad.
Untere Bult 9
D-3061 Heuerssen(DE)
Erfinder: Lücking, Wilfried, Dipl.-Ing.
Rektor-Seemann-Strasse 20
D-4952 Porta Westfalica(DE)

(74) Vertreter: Gramm, Werner, Prof. Dipl.-Ing. et al
Patentanwälte Gramm + Lins
Theodor-Heuss-Strasse 2
D-3300 Braunschweig(DE)

(54) Verfahren für die Beschickung von Stanzen, Inline-Maschinen o. dergl. mit aus Wellpappebogen bestehenden Paketen.

(57) Die Erfindung betrifft ein Verfahren für die Beschickung von Stanzen, Inline-Maschinen o.dergl. mit Paketen, die aus flach aufeinanderliegenden Wellpappebogen bestehen. Zur Reduzierung des bisher für die Abnahme eines Paketes erforderlichen apparativen Aufwandes wird vorgeschlagen, das abzunehmende Paket (15) zuerst einseitig anzuheben, dann quer zu seiner Hauptförderrichtung (2) zu verlagern und dann auf seiner über den Reststapel hinausragenden Seite zu untergreifen, anzuheben und aus dem Paketbildungsbereich herauszufördern.

## Verfahren für die Beschickung von Stanzen, Inline-Maschinen o.dergl. mit aus Wellpappebogen bestehenden Paketen

Die Erfindung betrifft ein Verfahren für die Beschickung von Stanzen, Inline-Maschinen o.dergl. mit Paketen, die aus flach aufeinanderliegenden Wellpappebogen bestehen und nacheinander von einem sich in Ruhe befindlichen, aus mehreren, in Förderrichtung der Pakete hintereinanderliegenden Stapeln bestehenden Block jeweils von oben abgenommen und quer zu ihrer Längsrichtung in ein Magazin o.dergl. der genannten Verarbeitungsmaschine gefördert werden, wobei die im Stapel oben liegenden Wellpappebogen über eine der gewünschten Pakethöhe entsprechenden Höhe auf der einen Schmalseite des Stapels abgestützt werden, während auf der gegenüberliegenden Schmalseite ebenfalls eine Abstützung über die genannte Höhe unter Ausübung eines Anpreßdruckes und anschließend ein einseitiges Anheben des so erfaßten Paketes erfolgt, wodurch ein keilförmiger Luftspalt zwischen Paketunterseite und Stapeloberseite geschaffen wird, worauf das Paket untergriffen, von oben mit einer nach unten gerichteten Druckkraft beaufschlagt, später angehoben und dann aus dem Paketbildungsbereich herausgefördert und auf die Förderebene eines nachgeordneten Förderers abgesenkt wird.

Dieses Verfahren läßt sich der DE-OS 35 14 487 entnehmen. Bei diesem vorbekannten Verfahren ist vorgesehen, den durch das einseitige Anheben geschaffenen keilförmigen Luftspalt zwischen Paketunterseite und Stapeloberseite durch Einsteuerung eines Trennelementes über die volle Paketbreite zu verlängern, so daß sich ein durchgehend lichter Abstand zwischen Paketunterseite und Stapeloberseite ergibt. Das Paket wird dann untergriffen, von oben mit einer nach unten gerichteten Druckkraft beaufschlagt, angehoben und anschließend in Richtung auf die nachgeordnete Verarbeitungsmaschine abgefördert.

Der Erfindung liegt die Aufgabe zugrunde, durch Abwandlung des vorbekannten Verfahrens den für dessen Durchführung erforderlichen apparativen Aufwand zu verringern.

Diese Aufgabe wird gemäß der Erfindung in Verbindung mit den eingangs aufgeführten Verfahrensmerkmalen durch folgende zusätzliche Verfahrensschritte gelöst:

a) Nach der Beaufschlagung mit einer nach unten gerichteten Druckkraft und vor dem Anheben des Paketes wird das Paket quer zur Hauptförderrichtung verlagert, wobei der oberste Wellpappebogen des Reststapels in seiner Lage fixiert wird;

b) das Maß der genannten Querverlagerung ist kleiner als die halbe Länge eines Wellpappebogens;

c) das querverlagerte Paket wird auf seiner über den Reststapel hinausragenden anderen Schmalseite ebenfalls untergriffen und zugleich von oben mit einer nach unten gerichteten Druckkraft beaufschlagt;

d) das Paket wird nun an beiden Schmalseiten angehoben und dann aus dem Paketbildungsbereich herausgefördert.

Der durch das neue Verfahren in erster Linie erzielte Vorteil ist darin zu sehen, daß das bisher erforderliche, in den keilförmigen Luftspalt zwischen Paketunterseite und Stapeloberseite einzusteuernde Trennelement ersatzlos entfallen kann. Dadurch läßt sich der apparative Aufwand verringern, wodurch außerdem die Funktionssicherheit der Vorrichtung insgesamt verbessert wird. Durch die während der Querverlagerung des Paketes vorgenommene Fixierung des obersten Wellpappebogens des Reststapels wird verhindert, daß dieser Wellpappebogen durch den untersten Wellpappebogen des anzuhebenden Paketes bei dessen Querverlagerung verschoben wird. Die Querverlagerung braucht nur soweit zu erfolgen, daß das Paket im Bereich seines über den Reststapel hinausragenden Endes einfach und sicher untergriffen werden kann.

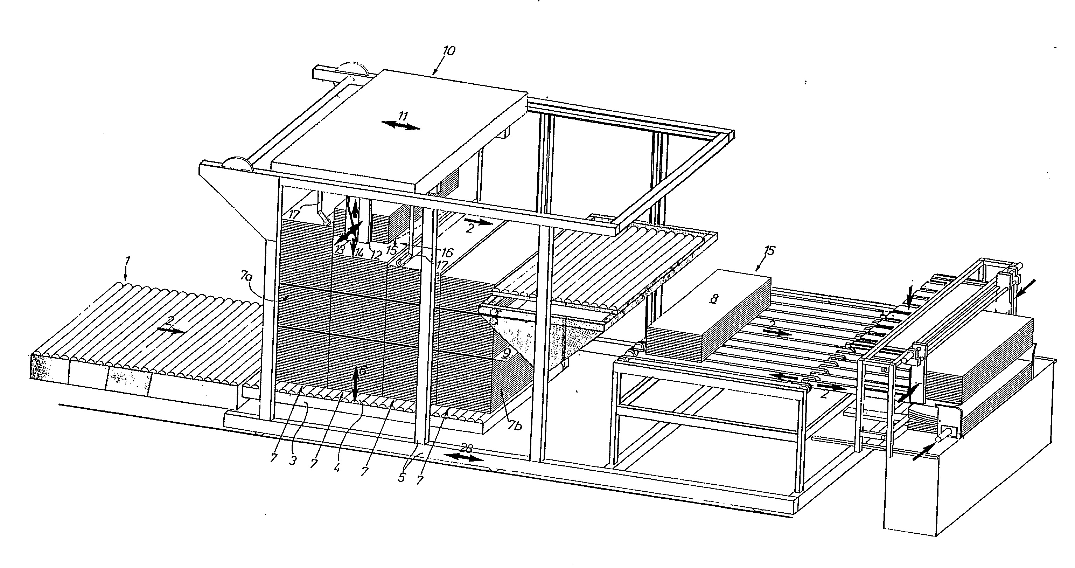

In der Zeichnung ist eine als Beispiel dienende Ausführungsform der Erfindung schematisch dargestellt.

Die dargestellte Anlage besteht aus einem stationären Rollenförderer 1, dem in Förderrichtung 2 ein Hubtisch 3 nachgeordnet ist, der nicht angetriebene Rollen 4 aufweist und in einem Gestell 5 anheb- und absenkbar aufgehängt ist (siehe Doppelpfeil 6). Die Aufhängeanordnung sowie die Vorrichtung zum Anheben bzw. Absenken des Hubtisches 3 sind nicht näher dargestellt. Der Hubtisch 3 dient zur Aufnahme von über den Rollenförderer 1 herangeförderten Stapeln 7, die jeweils aus flach aufeinanderliegenden Wellpappebogen 8 bestehen, die ein rechteckiges Format aufweisen, wobei die Schmalseite 7a des Stapels 7 eine Länge von ≦ 400 mm aufweisen kann. Jeder Stapel 7 weist zu seiner Stabilisierung Zwischenlagen 9 auf, die aus der vorderen Stirnseite 7b des Stapels 7 zumindest etwa 10 cm herausragen, sich aber nicht über die volle Breite der Stirnseite 7b erstrecken müssen. Die Zeichnung läßt überdies erkennen, daß der Hubtisch 3 zur Aufnahme mehrerer in Förderrichtung 2 hintereinanderliegender Stapel 7 geeignet ist.

Auf dem Gestell 5 ist ein Paketgreifer 10 in bzw. entgegen der Förderrichtung 2 verfahrbar angeordnet (siehe Doppelpfeil 11). Der Paketgreifer 10 ist mit einer nicht näher dargestellten, quer zur Förderrichtung 2 gegen die hintere Schmalseite des Stapels 7 steuerbaren lotrechten Anschlagplatte ausgestattet und weist ferner eine dieser gegenüberliegende Andruckplatte 12 auf, die ebenfalls quer zur Förderrichtung 2 verfahrbar ist (siehe Doppelpfeil 13), zusätzlich aber auch noch angehoben und abgesenkt werden kann (siehe Doppelpfeil 14). Diese Andruckplatte 12 ist mit einer den Stapelschmalseiten 7a zugewandten Andruckfläche versehen, die z.B. aus Gummi bestehen kann und eine wirksame Höhe aufweist, die der jeweils gewünschten Höhe des von dem Stapel 7 abzunehmenden Paketes 15 entspricht. Wird die Andruckplatte 12 gegen die Schmalseite 7a des Stapels 7 gedrückt und anschließend etwas angehoben, dann nimmt aufgrund der Haftreibung die Andruckplatte 12 das ihr zugeordnete Ende des Paketes 15 mit nach oben, so daß sich zwischen Paketunterseite und der neu gebildeten Oberfläche des Stapels 7 ein keilförmiger Spalt 16 ergibt. Im Bereich dieser angehobenen Schmalseite wird das Paket 15 untergriffen von in der Zeichnung nicht näher dargestellten Untergreifern, z.B. Tragarmen, die aus einer inaktiven Stellung, in der sie außerhalb des von den Stapeln 7 auf dem Hubtisch 3 eingenommenen Raumes liegen, in eine Arbeitsstellung verschwenkt werden können, in der sie das abzunehmende Paket 15 untergreifen. Um ein Durchbiegen des vom Stapel 7 abzuhebenden Paketes 15 zu verhindern, ist ein in der Zeichnung nicht dargestellter Druckstempel o.dergl. vorgesehen, der gegen die Oberseite des abzuhebenden Paketes 15 steuerbar ist und auf diese einen nach unten gerichteten Druck ausübt.

Anschließend wird das so nur im Bereich seiner einen Schmalseite angehobene Paket 15 quer zur Hauptförderrichtung 2 verlagert, was beispielsweise durch gleichzeitiges Verfahren der genannten Anschlagplatte sowie der genannten Andruckplatte 12 quer zur Hauptförderrichtung 2 erfolgen kann. Während dieser Querverlagerung verhindert eine nicht näher dargestellte Reststapelhalteeinrichtung ein Verschieben des obersten Wellpapierbogens des Reststapels durch den untersten Wellpappenbogen des teilweise angehobenen Paketes 15 bei dessen Querverlagerung. Diese Querverlagerung erfolgt nur soweit, bis das querverlagerte Paket 15 mit seiner einen Schmalseite 7a über den Reststapel hinausragt und in diesem Bereich nunmehr ebenfalls untergriffen werden kann und zwar beispielsweise wiederum durch nicht näher dargestellte Untergreifer, die ebenfalls z.B. Tragarme sein können. Gleichzeitig wird wiederum durch einen nicht dargestellten Druckstempel o.dergl. auf die Oberseite des abzuhebenden Paketes 15 ein nach unten gerichteter Druck ausgeübt.

Das Paket 15 wird nun an beiden Schmalseiten angehoben und dann aus dem Paketbildungsbereich in Richtung des Pfeiles 2 herausgefördert. Um beim Anheben des Paketes 15 ein Mitnehmen der angrenzenden Wellpappebogen der benachbarten Stapel 7 zu verhindern, sind Niederhalter 17 vorgesehen, die auf die Oberfläche der jeweils benachbarten Stapel 7 abgesenkt werden können.

Der weitere Aufbau der Vorrichtung sowie ihre Wirkungsweise entsprechen dem Ausführungsbeispiel gemäß der DE-OS 35 14 487.

## Ansprüche

Verfahren für die Beschickung von Stanzen, Inline-Maschinen o.dergl. mit Paketen (15), die aus flach aufeinanderliegenden Wellpappebogen (8) bestehen und nacheinander von einem sich in Ruhe befindlichen, aus mehreren, in Förderrichtung (2) der Pakete (15) hintereinanderliegenden Stapeln (7) bestehenden Block jeweils von oben abgenommen und quer zu ihrer Längsrichtung in ein Magazin o.dergl. der genannten Verarbeitungsmaschine gefördert werden, wobei die im Stapel (7) oben liegenden Wellpappebogen (8) über eine der gewünschten Pakethöhe entsprechenden Höhe auf der einen Schmalseite (7a) des Stapels (7) abgestützt werden, während auf der gegenüberliegenden Schmalseite (7a) ebenfalls eine Abstützung über die genannte Höhe unter Ausübung eines Anpreßdruckes und anschließend ein einseitiges Anheben des so erfaßten Paketes (15) erfolgt, wodurch ein keilförmiger Luftspalt (16) zwischen Paketunterseite und Stapeloberseite geschaffen wird, worauf das Paket (15) untergriffen, von oben mit einer nach unten gerichteten Druckkraft beaufschlagt, später angehoben und dann aus dem Paketbildungsbereich herausgefördert und auf die Förderebene eines nachgeordneten Förderers abgesenkt wird,

**gekennzeichnet** durch folgende Verfahrensschritte:

a) Nach der Beaufschlagung mit einer nach unten gerichteten Druckkraft und vor dem Anheben des Paketes (15) wird das Paket (15) quer zur Hauptförderrichtung (2) verlagert, wobei der oberste Wellpappebogen des Reststapels in seiner Lage fixiert wird;

b) das Maß der genannten Querverlagerung ist kleiner als die halbe Länge eines Wellpappebogens (8);

c) das querverlagerte Paket (15) wird auf seiner über den Reststapel hinausragenden anderen Schmalseite (7a) ebenfalls untergriffen und zugleich von oben mit einer nach unten gerichteten Druckkraft beaufschlagt;

d) das Paket (15) wird nun an beiden Schmalseiten (7a) angehoben und dann aus dem Paketbildungsbereich herausgefördert.

**EUROPÄISCHER RECHERCHENBERICHT**

Nummer der Anmeldung

EP 89 10 0941

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 514 487 (MINDA)<br>* Insgesamt *<br>--- | 1 | B 65 H 31/30<br>B 65 H 3/32<br>B 65 G 61/00<br>B 65 G 59/02 |
| A | US-A-4 441 844 (MILLER)<br>* Insgesamt *<br>--- | 1 | |
| A | EP-A-0 217 757 (O.M.G. DI GIORGIO PESSINA E ALDO PEROBELLI S.N.C.)<br>* Insgesamt *<br>--- | 1 | |
| A | GB-A-2 119 340 (STOBB)<br>* Insgesamt *<br>--- | 1 | |
| A | WO-A-8 704 141 (BERTIN & CIE)<br>* Insgesamt *<br>----- | 1 | |

**RECHERCHIERTE SACHGEBIETE (Int. Cl.4)**

B 65 H
B 65 G

**Der vorliegende Recherchenbericht wurde für alle Patentansprüche erstellt**

| Recherchenort | Abschlußdatum der Recherche | Prüfer |
|---|---|---|
| DEN HAAG | 17-04-1989 | OSTYN T.J.M. |